# EUROPÄISCHE PATENTSCHRIFT

(11) **EP 1 097 843 B1**
(45) Veröffentlichungstag und Bekanntmachung des Hinweises auf die Patenterteilung: **05.07.2006**
(21) Anmeldenummer: 99124260.3
(22) Anmeldetag: 04.12.1999
(51) Int. Cl.: B60Q 7/00

(54) **Zusammenlegbares Warndreieck**
Foldable warning triangle
Triangle de signalisation pliable

(30) Priorität: 08.11.1999 DE 19953619
(43) Veröffentlichungstag der Anmeldung: 09.05.2001
(73) Patentinhaber: Gebra GmbH & Co. Sicherheitsprodukte KG, 53773 Hennef (DE)
(72) Erfinder: Stei, Alexander, 51545 Waldbröl (DE); Walgenbach, Reinhold, 53773 Hennef (DE); Pimmer, Holger, 53797 Lohmar (DE)
(74) Vertreter: Brandenburg, Thomas

(56) Entgegenhaltungen:
- EP-A- 0 960 776

## Beschreibung

Die Erfindung betrifft ein zusammenlegbares Warndreieck zur Mitführung in Kraftfahrzeugen mit einer Basisreflektorleiste, an der direkt oder über eine Metallplatte ausschwenkbare Standbeine angebracht sind, und an der Basisreflektorleiste und/oder der Metallplatte schwenkbar angebrachten Seitenreflektorleisten, wobei den Reflektorleisten rote Fluoreszenzleisten zugeordnet sind, die zwischen einer ausgefahrenen Sichtlage neben ihrer Reflektorleiste und einer vor oder hinter ihre Reflektorleiste eingefahrenen Lage beweglich sind.

Bei zusammenlegbaren Warndreiecken nach ECE-Regelung sind die roten Fluoreszenzleisten an den Reflektorleisten starr angeformt, so daß sich für das zusammengelegte Dreieck eine Breite ergibt, die etwa der Summe der Breiten von Reflektorleiste und Fluoreszenzleiste ist. Für die Unterbringung des Warndreiecks im Kraftfahrzeug ist eine kompakte zusammengelegte Form und eine geringe Breite des so gebildeten Pakets von Vorteil. Es ist zwar bekannt, anstelle der angeformten Fluoreszenzleisten eine Kunststofffolie mit einer fluoreszierenden Beschichtung zu benutzen. Die Fluoreszierende Folie besteht zur Zeit aus Polyvinylchlorid und ist deshalb aus Umweltschutzgründen unerwünscht. Außerdem wird diese Folie infolge der mehrfachen unregelmäßigen Faltung beim Zusammenlegen und Verstauen des Warndreiecks in einem Köcher schnell unansehnlich.

Aus der älteren Recht gemäß Art 54(3) EPÜ EPO 960 776 A2 ist ein zusammenlegbares Warndreieck zur Mitführung in Kraftfahrzeugen, mit einer Basisreflektorleiste, an der direkt oder über eine Metallplatte ausschwenkbare Standbeine angebracht sind, und an der Basisreflektorleiste und/oder der Metallplatte schwenkbar angebrachten Seitenreflektorleisten, wobei den Reflektorleisten rote Fluoreszenzleisten zugeordnet sind, die zwischen einer ausgefahrenen Sichtlage neben ihrer Reflektorleiste und einer vor oder hinter ihrer Reflektorleiste eingefahrenen Lage beweglich sind, wobei die Fluoreszenzleisten nahe ihren Enden gelenkig verbunden sind und wobei das Fluoreszenzleistendreieck an den der gelenkigen Seitenfluoreszenzleiste benachbarten Ecken durch Koppelglieder mit der Basisreflektorleiste oder der Metallplatte verbunden ist und an der der gelenkigen Seitenfluoreszenzleiste gegenüberliegenden Ecke durch ein Gelenk mit der Seitenreflektorleiste oder der Basisreflektorleiste oder ihrer Metallplatte verbunden ist, bekannt. Die Beweglichkeit der Fluoreszenzleisten bei den dort beschriebenen Ausführungsformen erfordert eine aufwendige Mechanik. Auch die Ausführungsform nach Figur 5, bei der die beiden Seitenfluoreszenzleisten durch separate flexible Koppelglieder mit ihren Reflektorleisten verbunden sind, erfordert Verschiebegelenke an der Basisfluoreszenzleiste, damit sich diese beim Zusammenlegen des Dreiecks hinter die Metallplatte schieben kann.

Aufgabe der vorliegenden Erfindung ist die Verbesserung und Vereinfachung des eingangs genannten Warndreiecks. Durch die Vereinfachung soll auch die Fertigung kostengünstiger möglich sein. Insbesondere sollen die Verschiebegelenke der genannten Konstruktion entfallen. Weitere Vorteile ergeben sich aus der folgenden Beschreibung.

Diese Aufgabe wird bei dem eingangs genannten zusammenlegbaren Warndreieck erfindungsgemäß dadurch gelöst, daß die Fluoreszenzleisten nahe ihren Enden gelenkig verbunden sind, in einer der Seitenfluoreszenzleisten ein Gelenk angeordnet ist und daß das Fluoreszenzleistendreieck an den der gelenkigen Seitenfluoreszenzleiste benachbarten Ecken durch Koppelglieder mit der der starren Seitenfluoreszenzleiste zugeordneten Seitenreflektorleiste und der Basisreflektorleiste oder der Metallplatte verbunden ist und an der der gelenkigen Seitenfluoreszenzleiste gegenüberliegenden Ecke durch ein Gelenk mit der Seitenreflektorleiste oder der Basisreflektorleiste oder ihrer Metallplatte verbunden ist.

Bei der erfindungsgemäßen Konstruktion hat das Fluoreszenzleistendreieck an allen drei Ecken Gelenke. Die Zusammenlegbarkeit dieses Dreiecks wird dadurch erreicht, daß die eine Seitenfluoreszenzleiste in der Mitte mit einem Gelenk versehen ist. Diese Leiste kann zur Mitte des Dreiecks einknicken, so daß sich die beiden einteiligen Fluoreszenzleisten einander nähern können und in Übereinanderlage gebracht werden können. Das Fluoreszenzleistendreieck stellt daher ein Gelenkviereck dar. Es kann separat von den Reflektorleisten gefertigt und dann durch das genannte Gelenk mit einer Reflektorleiste (oder der Metallplatte) verbunden werden. Anschliessend können die flexiblen Koppelglieder montiert werden. Beim Aufrichten der Seitenreflektorleisten zwecks Aufstellung des Warndreiecks nimmt die eine Seitenreflektorleiste das angekoppelte Fluoreszenzleistendreieck mit in die Aufstellposition, wobei sich die zunächst übereinanderliegenden Fluoreszenzleisten auseinanderschieben. In der Aufstellposition kommen die Fluoreszenzleisten an der Innenkante der Reflektorleisten zu liegen. Dabei wird die mit dem Gelenk ausgestattete Fluoreszenzleiste automatisch gestreckt. Beim Zusammenlegen des Warndreiecks durch Herabschwenken der Reflektorleisten wird das an die eine Reflektorleiste angekoppelte Fluoreszenzleistendreieck automatisch zusammengelegt, nachdem die zweiteilige Fluoreszenzleiste nach innen eingeknickt ist. Die Koppelglieder können unterschiedlich ausgebildet sein, z.B. als flexibler monofiler Faden, geflochtene Schnur, Folienband oder als Lasche mit Langloch.

Vorzugsweise sind die Koppelglieder in ihrer Länge so bemessen, daß die angekoppelte Seiten- und Basisfluoreszenzleiste bei gespannten Koppelgliedern parallel neben der zugeordneten Reflektorleiste liegen. So wird erreicht, daß sich innerhalb des Reflektorleistendreiecks im aufgerichteten Zustand auch das konzentrische Fluoreszenzleistendreieck in genauer Parallellage zu den Reflektorleisten aufstellt.

Zweckmäßigerweise ist das das Fluoreszenzleistendreieck mit der Reflektorleiste verbindende Gelenk durch ein Messing-Rohrniet gebildet. Das Gelenk kann jedoch auch anders ausgebildet werden, z.B. durch einen angeformten Kunststoff-Nietzapfen.

Zwei Ausführungsformen der Erfindung werden nachfolgend an Hand der Zeichnung näher beschrieben. Es zeigen
Figur 1 die Rückseite einer ersten Ausführungsform des aufgerichteten Warndreiecks;
Figur 2 das in Figur 1 gezeigte Warndreieck in einem teilweise zusammengelegten Zustand; und
Figur 3 die Rückseite einer zweiten Ausführungsform des erfindungsgemäßen Warndreiecks.

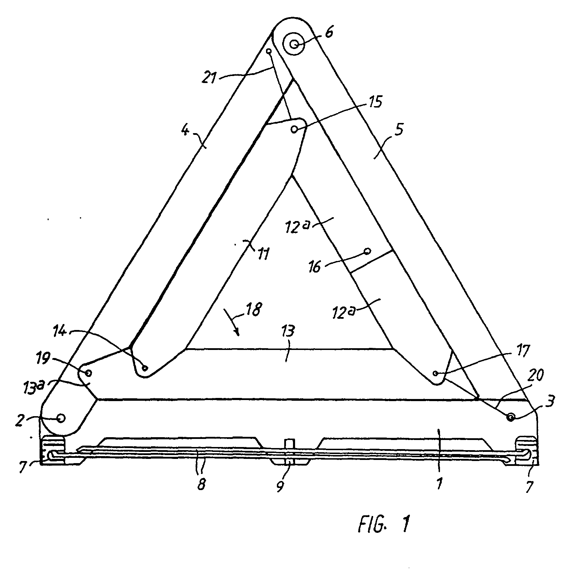

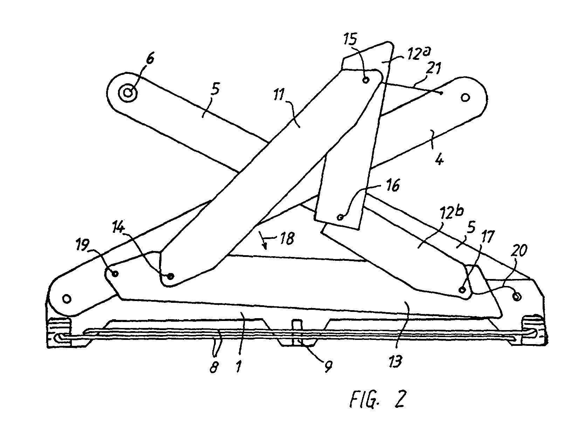

Bei dem in den Figuren 1 und 2 gezeigten Warndreieck ist an den beiden Enden einer Basismetallplatte 1 mittels der Gelenke 2 und 3 je eine Reflektorleiste 4 bzw. 5 schwenkbar angebracht. Die Metallplatte 1 trägt ebenfalls vorderseitig eine Reflektorleiste (in der Zeichnung nicht sichtbar). Die Leisten 4 und 5 tragen vorderseitig Reflektoren und haben am oberen Ende eine Rastverbindung 6, durch die der in Figur 1 gezeigte aufgerichtete Zustand des Dreiecks stabilisiert werden kann. An den beiden Enden der Metallplatte 1 sind beidseitig Lagerkörper 7 befestigt, von denen in den Figuren nur die beiden rückseitigen sichtbar sind. In den Lagerkörpern 7 sind die Standbeine 8 schwenkbar gelagert. Die Metallplatte 1 trägt ferner in der Mitte beidseitig eine Rastaufnahme 9, in der die Standbeine 8 in der dargestellten eingeschwenkten Lage festgelegt werden.

Der nicht sichtbaren Basisreflektorleiste ist eine Fluoreszenzleiste 13 zugeordnet; der Reflektorleiste 4 ist eine Fluoreszenzleiste 11 zugeordnet, und der Reflektorleiste 5 ist eine zweiteilige Fluoreszenzleiste 12^{a}, 12^{b} zugeordnet. Die Fluoreszenzleisten 11,12^{a},12^{b},13 sind durch Gelenke 14,15,16,17 zu einem eigenen Gelenkviereck verbunden. Das Gelenk 16 liegt in der Mitte zwischen den Gelenken 15 und 17, so daß die Fluoreszenzleiste 12^{a}, 12^{b} zur Mitte des Dreiecks einknicken kann, wenn die Fluoreszenzleiste 11 in Richtung des Pfeils 18 zur Fluoreszenzleiste 13 geschwenkt wird.

Damit beim Hoch- und Herunterschwenken der Reflektorleisten 4 und 5 zwecks Aufstellung und Zusammenlegung des Warndreiecks das separate Fluoreszenzleistendreieck 11,12^{a},12^{b},13 gleichzeitig aufgerichtet bzw. zusammengelegt wird, ist das Fluoreszenzleistendreieck an drei Punkten mit dem Reflektorleistendreieck (einschließlich ihrer Metallplatte) verbunden. Wie ersichtlich, hat die Basisfluoreszenzleiste 13 eine Verlängerung 13^{a}. An dieser Verlängerung ist die Fluoreszenzleiste 13 durch das Gelenk 19 mit der Reflektorleiste 4 verbunden. Ferner ist die Basisfluoreszenzleiste 13 nahe ihrem anderen Ende durch einen ein flexibles Koppelglied darstellenden monofilen Faden 20 mit der Metallplatte 1 verbunden. Bei der dargestellten Ausführungsform ist der Faden 20 an den Gelenken 17 und 3 befestigt. Diese Kopplung soll die Fluoreszenzleiste 13 beim Aufrichten des Warndreiecks in der in Figur 1 gezeigten Lage halten, was Voraussetzung dafür ist, daß die Fluoreszenzleisten 12^{a},12^{b} gestreckt werden. Selbstverständlich kann das Koppelglied 20 auch an anderen Punkten der Basisfluoreszenzleiste 13 und der Metallplatte 1 befestigt sein, vorausgesetzt, daß die Aufrichtbewegung der Leiste 13 in der in Figur 1 gezeigten Paralellage zu der Basismetallplatte 1 begrenzt wird. Das obere Ende der Reflektorleiste 4 ist durch ein flexibles Koppelglied 21 mit dem Gelenk 15 so verbunden, daß beim Hochschwenken der Reflektorleiste 4 die zunächst auf dieser Leiste liegende Fluoreszenzleiste 11 sich maximal in die in Figur 1 dargestellte Parallellage zu der Reflektorleiste 4 verschieben kann, in der der als Koppelglied dienende monofile Faden 21 gespannt ist.

Figur 2 zeigt das Warndreieck in einem Zwischenzustand zwischen der in Figur 1 gezeigten aufgerichteten Lage und der zusammengelegten Lage, in der alle Leisten 4,5,11,12^{a},12^{b},13 auf der Metallplatte übereinanderliegen, so daß das Paket etwa nur die Breite der Metallplatte 1 hat. Aus Figur 2 ist ersichtlich, daß beim Herabschwenken der Reflektorleiste 4 die Fluoreszenzleisten 11,12^{a} durch das Koppelglied 21 mitgenommen werden, wobei sich der Winkel zwischen den Fluoreszenzleisten 11 und 13 verringert und die Leisten 12^{a} und 12^{b} an dem Gelenk 16 nach innen einknicken, wobei die durch die Gelenke 14 und 16 gehende Gerade die Winkelhalbierende des Winkels zwischen den Leisten 11 und 13 bildet.

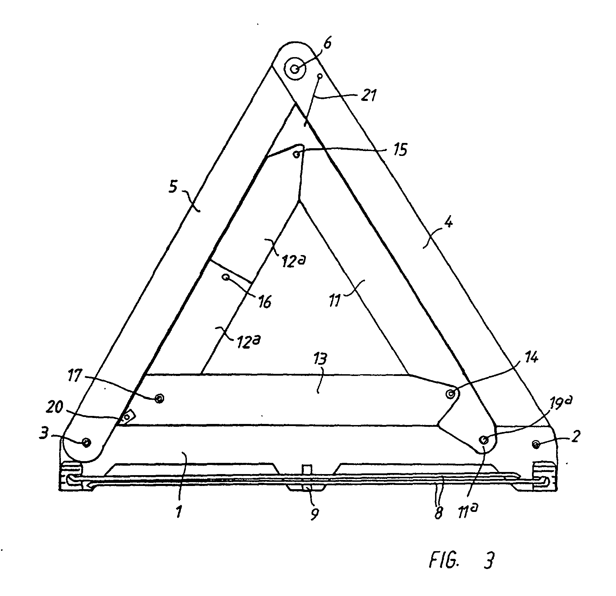

Die in Figur 3 gezeigte Ausführungsform des Warndreiecks unterscheidet sich von dem Warndreieck der Figur 1 im wesentlichen dadurch, daß die Fluoreszenzleiste 11 eine Verlängerung 11^{a} hat, an der sie direkt mittells eines Gelenks 19^{a} auf der Metallplatte 1 angelenkt ist. Im übrigen besteht das Fluoreszenzdreieck 11,12^{a},12^{b},13 wie bei der Ausführungsform nach Figur 1 aus einem Gelenkviereck mit den vier Gelenken 14 bis 17. Die Koppelglieder 20,21 greifen nicht wie bei der Ausführungsform nach Figur 1 an den Gelenken 17 bzw. 15 an, sondern in der Nähe der Ecken der Leisten 13 bzw. 11. Der Bewegungsmechanismus der Fluoreszenzleisten beim Aufrichten und Zusammenlegen des Warndreiecks ist bei der Ausführungsform nach Figur 3 der gleiche wie bei der Ausführungsform nach der Figur 1.

Das erfindungsgemäße Warndreieck hat im zusammengelegten Zustand nur die geringe Breite der Metallplatte 1. Mit dem Aufrichten der Reflektorleiste 4 stellt sich automatisch das Fluoreszenzleistendreieck 11-13 mit auf. Beim Herabschwenken der Reflektorleiste 4 wird das Fluoreszenzleistendreieck automatisch auf die Breite der Metallplatte zusammengelegt, wobei die Bewegungen der Fluoreszenzleisten umgekehrt wie beim Aufrichten des Dreiecks erfolgen. Das Warndreieck zeichnet sich durch einfache Handhabung aus.

Das Gelenk liegt im allgemeinen in der Mitte der Seitenfluoreszenzleiste; es kann jedoch aus außerhalb der Mitte liegen, wenn wenn wenigstens eins der Gelenke 15,17 ein Verschiebegelenk ist.

## Patentansprüche

1. Zusammenlegbares Warndreieck zur Mitführung in Kraftfahrzeugen, mit einer Basisreflektorleiste, an der direkt oder über eine Metallplatte (1) ausschwenkbare Standbeine (8) angebracht sind, und an der Basisreflektorleiste und/oder der Metallplatte schwenkbar angebrachten Seitenreflektorleisten (4,5), wobei den Reflektorleisten rote Fluoreszenzleisten (11 bis 13) zugeordnet sind, die zwischen einer ausgefahrenen Sichtlage neben ihrer Reflektorleiste und einer vor oder hinter ihrer Reflektorleiste eingefahrenen Lage beweglich sind, wobei die Fluoreszenzleisten nahe ihren Enden gelenkig verbunden sind, in einer der Seitenfluoreszenzleisten ein zweiteres Gelenk (16) angeordnet ist, und wobei das Fluoreszenzleistendreieck (11,12^{a}, 12^{b},13) an den der gelenkigen Seitenfluoreszenzleiste (12^{a},12^{b}) benachbarten Ecken durch Koppelglieder (21,20) mit der der starren Seitenfluoreszenzleiste (11) zugeordneten Seitenreflektorleiste (4) und der Basisreflektorleiste oder der Metallplatte (1) verbunden ist und an der der gelenkigen Seitenfluoreszenzleiste (12^{a},12^{b}) gegenüberliegenden Ecke durch ein Gelenk (19,19^{a}) mit der Seitenreflektorleiste (4) oder der Basisreflektorleiste oder ihrer Metallplatte (1) verbunden ist.

2. Warndreieck nach Anspruch 1, **dadurch gekennzeichnet, daß** die Koppelglieder (21,20) in ihrer Länge so bemessen sind, daß die angekoppelte Seiten- und Basisfluoreszenzleiste (11 bzw. 13)bei gespannten Koppelgliedern parallel neben der zugeordneten Reflektorleiste liegen.

3. Warndreieck nach Anspruch 1 oder 2, **dadurch gekennzeichnet, daß** das Gelenk (19,19^{a}) auf einer Verlängerung (13^{a},11^{a}) der Basisfluoreszenzleiste (13) oder der starren Seitenfluoreszenzleiste (11) angeordnet ist.

4. Warndreieck nach einem der Ansprüche 1 bis 3, **dadurch gekennzeichnet, daß** die Koppelglieder (20,21) durch monofile oder polyfile Fäden, Folienbänder oder Laschen mit Langloch gebildet sind.

## Claims

1. Collapsible warning triangle for the conveyance in motor vehicles, with a basis reflector-bar, onto which directly or via a metal plate (I) swivelling supporting legs (8) are mounted, and on the basis reflector-bar and/or the metal plate pivoting mounted side reflector-bars (4,5), wherein to the reflector-bars red fluorescence-bars (11 to 13) are attached, which are movable between an extracted view-position aside their reflector-bar and a retracted position in front or behind their reflector-bar, wherein the fluorescence-bars are jointedly connected close to their ends, in one of the side-fluorescence-bars a further joint (16) is arranged, and wherein the fluorescence-bar triangle (11, 12', 12^{b}, 13) is connected at the corners adjacent to the jointed side-fluorescence-bar (12^{a}, 12^{b}) via coupling-members (21, 20) to the side reflector-bar (4) attached to the rigid side fluorescence-bar (II) and to the basis reflector-bar or the metal plate (I) and is connected at the corner opposed to the jointed side fluorescence-bar (12^{a}, 12^{b}) via a joint (19, 19^{a}) with the side reflector-bar (4) or to the basis relector-bar or to its metal plate (1).

2. Warning triangle according to claim one, **chracterised in that** the coupling-members (21,20) are measured in their length thus, that the coupled side and basis fluorescence-bars (11 respectively 13), if coupling-members are cocked, are lying parallel next to the attached reflector-bars.

3. Warning triangle according to claim one or two, **characterised in that** the joint (19, 19a) is arranged on an extension (13^{a}, 11^{a}) of the basis fluorescence-bar (13) or the rigid side fluorescence-bar (11).

4. Warning triangle according to one of the claims one to three, **characterised in that** the coupling-members (20, 21) are built by monofile or polyfile threads, film strips or straps with oblong hole.

## Revendications

1. Un triangle de présignalisation repliable faisant partie de l'équipement de bord des véhicules, avec une barre de base réfléchissante à laquelle sont attachés directement ou par l'intermédiaire d'une plaque métallique (1) des pieds pivotants (8), et avec des barres latérales réfléchissantes, montées de manière pivotante (4,5), à la barre de base réfléchissante et/ou à la plaque métallique, avec des barres fluorescentes rouges (11 à 13) attribuées aux barres réfléchissantes, étant amovibles et se trouvant, quand elles sont dépliées, à coté de leur barre réfléchissante et quand elles sont repliées, à l'avant de leur barre réfléchissante ou à l'arrière de celle-ci, compte tenu qu'elles sont reliées par articulation à proximité de leurs extrémités, qu'une articulation additionnelle (16) se trouve dans l'une des barres latérales fluorescentes, et compte tenu que le triangle de barres fluorescentes (11, 12 ^{a}, 12^{b}, 13) est relié par les angles avoisinants de la barre latérale fluorescente articulée (12 ^{a}, 12 ^{b}) au moyen d'éléments de couplage (21,20) à la barre latérale réfléchissante (4) attribuée à la barre latérale fluorescente rigide (11) et à la barre de base réfléchissante ou à la plaque métallique (1), et qu'il est relié par l'angle opposé de la barre latérale fluorescente articulée (12^{a}, 12^{b}) par une articulation (19, 19^{a}) à la barre latérale réfléchissante (4) ou à la barre de base réfléchissante ou à la plaque métallique (1).

2. Un triangle de présignalisation selon la revendication 1, **caractérisé par le fait que** les éléments de couplage (21,20) sont dimensionnés dans leur longueur, de manière à ce que les barres fluorescentes latérales et de base accouplées (11, 13) soient placées avec les éléments de couplage tendus, parallèlement à coté de la barre réfléchissante qui leur est attribuée.

3. Un triangle de présignalisation selon la revendication 1 ou 2, **caractérisé par le fait que** l'articulation (19, 19^{a}) se trouve sur un prolongement (13 ^{a}, 11 ^{a}) de la barre fluorescente de base (13) ou de la barre latérale fluorescente rigide (11).

4. Un triangle de présignalisation selon les revendications 1 à 3, **caractérisé par le fait que** les éléments de couplage (20,21) sont formés de filaments monofilaires ou polyfilaires, de rubans plastiques ou d'éclisses à trous oblongs.
